# EUROPÄISCHE PATENTSCHRIFT

(11) **EP 1 118 246 B1**
(45) Veröffentlichungstag und Bekanntmachung des Hinweises auf die Patenterteilung: **30.01.2008**
(21) Anmeldenummer: 99969887.1
(22) Anmeldetag: 23.09.1999
(51) Int. Cl.: H04Q 11/04

(54) **VERFAHREN ZUM ANSCHLIESSEN VON KOMMUNIKATIONSENDGERÄTEN AN EINE VERMITTLUNGSANLAGE ÜBER EIN KOMMUNIKATIONSNETZ**
METHOD FOR CONNECTING COMMUNICATIONS TERMINALS TO A EXCHANGE VIA A COMMUNICATIONS NETWORK
PROCEDE POUR CONNECTER DES TERMINAUX DE COMMUNICATION A UN CENTRAL TELEPHONIQUE PAR L'INTERMEDIAIRE D'UN RESEAU DE COMMUNICATION

(30) Priorität: 30.09.1998 DE 19845038
(43) Veröffentlichungstag der Anmeldung: 25.07.2001
(73) Patentinhaber: Siemens Enterprise Communications GmbH & Co. KG, 81379 München (DE)
(72) Erfinder: FRAAS, Wolfgang, D-82515 Wolfratshausen (DE); HÜNLICH, Klaus, D-85467 Neuching (DE); WEHREND, Klaus, D-82223 Eichenau (DE)
(86) Internationale Anmeldenummer: PCT/DE1999/003056
(87) Internationale Veröffentlichungsnummer: WO 2000/019765

(56) Entgegenhaltungen:
- EP-A- 0 827 305
- GB-A- 2 322 516

## Beschreibung

In der modernen Kommunikationstechnik besteht ein stetig steigender Bedarf an breitbandiger Übertragung von Informationen, wie z.B. von Fest- und Bewegtbildern bei Bildtelefonanwendungen bzw. von großen Datenmengen im sogenannten 'Internet'. Hierdurch steigt die Bedeutung von Übertragungstechniken für hohe und variable Datenübertragungsraten (größer 100 MBit/s), die sowohl den Anforderungen der Datenübertragung (hohe Geschwindigkeit bei variabler Übertragungsbitrate) als auch den Anforderungen der Sprachdatenübertragung (Erhalt von zeitlichen Korrelationen bei einer Datenübertragung über ein Kommunikationsnetz) Rechnung tragen. Ein bekanntes Datenübertragungsverfahren für hohe Datengeschwindigkeiten das zusätzlich die Anforderungen der Sprachdatenübertragung erfüllt ist der sogenannte Asynchrone Transfer Modus (ATM). Die Druckschrift GB-A-2322516 offenbart z.B. die Übertragung von Sprachdaten zwischen Multimedia -Pc's über ein ATM-Netz.

Hierbei ist insbesondere eine breitbandige Datenübermittlung bis in den Kommunikationsendstellenbereich, d.h. vom sendenden Kommunikationsendgerät bis zum empfangenden Kommunikationsendgerät - in der Literatur häufig mit 'End-to-End' Übermittlung bezeichnet - notwendig. Dies hat zur Folge, daß die Anzahl von sogenannten ATM-fähigen Kommunikationsendgeräten, d.h. von Kommunikationsendgeräten die das ATM-Datenformat für eine Datenübermittlung zwischen Kommunikationsendgerät und der, dem Kommunikationsendgerät zugeordneten Vermittlungsanlage unterstützen stark ansteigt.

Sind derartige ATM-fähigen Kommunikationsendgeräte, z.B. aufgrund einer großen Entfernung des Kommunikationsendgerätes von der dem Kommunikationsendgerät zugeordneten Vermittlungsanlage nicht direkt, sondern über ein nicht ATM-orientiertes Kommunikationsnetz mit einer Vermittlungsanlage verbunden, so muß vor einer Datenübermittlung über das Kommunikationsnetz eine Umwandlung des ATM-Datenformats auf das Datenformat des Kommunikationsnetzes erfolgen. Ist das Kommunikationsnetz ein häufig in Unternehmen bereits bestehendes Datennetz, in dem vorzugsweise IP-Protokolle (Internet Protokoll) eingesetzt werden, wie z.B. das sogenanntes 'Ethernet' oder der sogenannter 'Tokenring', so erfolgt eine Übermittlung von im Rahmen einer Sprachverbindung zu übermittelnden Daten über ein derartiges IP-orientierte Kommunikationsnetz gemäß des RTP-Protokolls (Realtime Transport Protokoll) nach ITU-T Standard H.225.0 (International Telecommunication Union).

Erfolgt eine Übermittlung von komprimierten Sprachdaten - wie beispielsweise im Rahmen des Mobilfunks angewendet - so müssen diese komprimierten Sprachdaten auf der Senderseite vor einer Übermittlung über das IP-orientierte Kommunikationsnetz dekomprimiert, in das IP-Datenformat gemäß des RTP-Protokolls umgewandelt und anschließend für die Übermittlung wieder komprimiert werden. Des weiteren müssen die Daten auf der Empfängerseite dekomprimiert, in das ursprüngliche Datenformat umgewandelt und anschließend für die Weiterübermittlung wieder komprimiert werden. Diese häufige Kompression/Dekompression der Sprachdaten führt zu einer Verfälschung der ursprünglich übermittelten Sprachdaten auf der Empfängerseite, die unter Umständen hörbar ist und somit als störend empfunden werden kann.

Aufgabe der folgenden Erfindung ist es, ein Verfahren anzugeben, durch welches eine Sprachdatenübermittlung über ein IP-orientiertes Rechnernetz ohne Verlust der Sprachqualität ermöglicht wird.

Die Lösung der Aufgabe erfolgt erfindungsgemäß mit den Merkmalen des Patentanspruchs 1 bzw. 2.

Zum besseren Verständnis einer Datenübermittlung zwischen einem ATM-fähigen Kommunikationsendgerät und einer dem Kommunikationsendgerät zugeordneten Vermittlungsanlage erscheint es erforderlich zunächst noch einmal auf bekannte Prinzipien näher einzugehen.

Eine Datenübermittlung zwischen einem ATM-fähigen Kommunikationsendgerät und einer dem Kommunikationsendgerät zugeordneten Vermittlungsanlage - in der Literatur häufig als 'Home-PBX' des Kommunikationsendgerätes bezeichnet - erfolgt üblicherweise auf Basis von sogenannten CPS-Paketen (Common Part Sublayer) - im weiteren als Substruktur-Elemente SE bezeichnet - gemäß der sogenannten ATM-Anpassungsschicht AAL-Tpy2 (ATM Adaption Layer). Durch die ATM-Anpassungsschicht AAL erfolgt dabei einer Anpassung zwischen dem Format der ATM-Schicht (Schicht 2) und der Vermittlungsschicht (Schicht 3) des OSI-Referenzmodells (Open System Interconnection).

Ein Substruktur-Element SE setzt sich aus einem 3 Bytes langem Zellkopf SH und einem Nutzdatenbereich I variabler Länge (0 bis 64 Byte) zusammen. Der Zellkopf eines Substruktur-Elementes SE untergliedert sich wiederum in eine 8 Bit lange Kanal-Identifizierung CID (Channel Identifier), eine 6 Bit lange Längen-Identifizierung LI (Length Indicator), eine 5 Bit lange Sender-Empfänger-Identifizierung UUI (User-to-User Indication) und eine 5 Bit lange Zellkopf-Kontrollsumme HEC (Header Error Control).

Ein wesentlicher Vorteil des erfindungsgemäßen Verfahrens besteht nun darin, daß die in Substruktur-Elemente verpackten Daten transparent, d.h. ohne Bearbeitung über das IP-orientierte Kommunikationsnetz übermittelt werden können und somit eine Kompression/Dekompression und die Umwandlung gemäß des RTP-Protokolls auf der Sender- und der Empfängerseite entfällt.

Ein weiterer Vorteil des erfindungsgemäßen Verfahrens besteht darin, daß durch eine Substrukturierung der für eine Datenübermittlung über das IP-orientierte Kommunikationsnetz eingerichteten Datenpakete in sogenannte Substruktur-Elemente, innerhalb eines Datenpakets unterschiedlichen Kommunikationsendgeräten zugeordnete Daten übermittelt werden können.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch die Übermittlung einer individuell einstellbaren Anzahl von einer Sprachverbindung zugeordneten Nutzdaten-Bytes in einem Substruktur-Element eines Datenpakets eine Datenübermittlung mit einer variablen Übertragungsrate realisierbar ist. Dies ermöglicht die Verwendung von Kompressionsalgorithmen, die aus einem kontinuierlichen Datenstrom in Abhängigkeit von der in den zu übermittelnden Daten vorhandenen Redundanz einen variablen Datenstrom ohne Verfälschung der Information erzeugen.

Ein weiterer Vorteil von in den Unteransprüchen definierten Ausgestaltungen der Erfindung besteht darin, daß durch die Definition des ersten Nutzdaten-Segments eines Datenpaketes als Zeiger, der die Anfangsadresse eines ersten im Nutzdatenbereich des Datenpaketes befindlichen Substruktur-Elementes bezeichnet, eine Synchronisierung von Sender und Empfänger bei einem Verlust einer oder mehrerer Datenpakete auf einfache Weise realisierbar ist.

Ein Ausführungsbeispiel der Erfindung wird im folgenden anhand der Zeichnung näher erläutert.

Dabei zeigen:
- Fig. 1:: ein Strukturbild zur schematischen Darstellung von über ein IP-orientiertes Kommunikationsnetz mit einer Vermittlungsanlage verbundenen Kommunikationsendgeräten;
- Fig. 2:: ein Strukturbild zur schematischen Darstellung von in Substruktur-Elemente untergliederten IP-Datenpaketen gemäß eines ersten Umwandlungsmodus;
- Fig. 3:: ein Strukturbild zur schematischen Darstellung von in Substruktur-Elemente untergliederten IP-Datenpaketen gemäß eines zweiten Umwandlungsmodus.

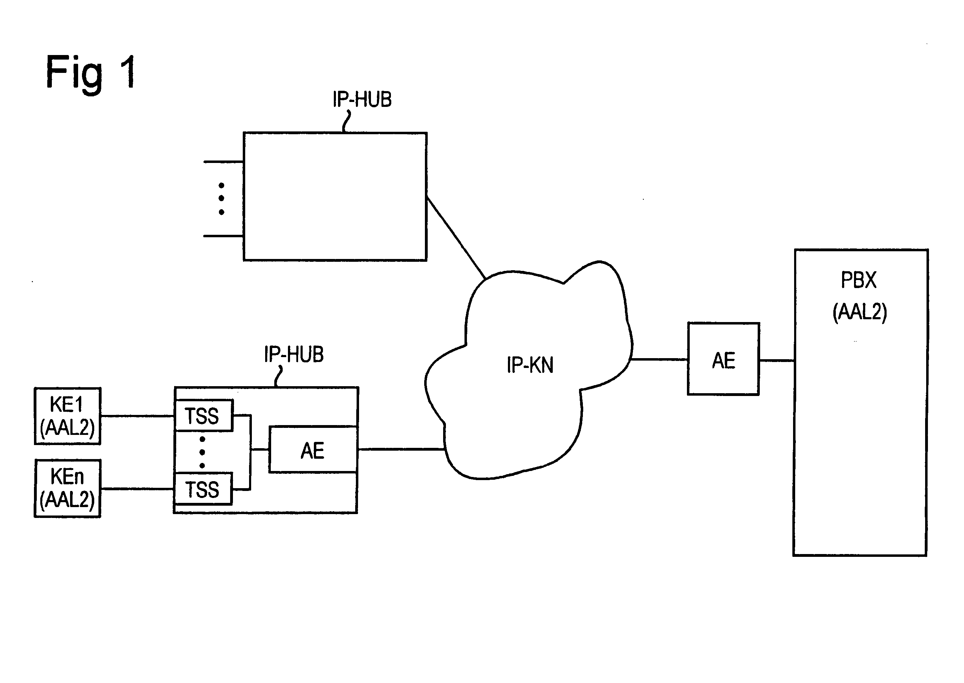

Fig. 1 zeigt in einer schematischen Darstellung einer Vermittlungsanlage PBX (Private Branche Exchange), die über eine Anschlußeinheit AE mit einem IP-orientierten (Internet Protokoll) Kommunikationsnetz IP-KN verbunden ist. Beispiele für Datennetze, in denen vorzugsweise IP-Protokolle eingesetzt werden, sind das sogenannte 'Ethernet' gemäß IEEE-Standard 802.3 oder der sogenannte 'Tokenring' gemäß IEEE-Standard 802.5 (Institute of Electrical and Electronics Engineers). Des weiteren sind an das IP-orientierte Kommunikationsnetz IP-KN IP-Übergabeeinheiten IP-HUB - in der Literatur häufig mit 'Hub' bezeichnet - angeschlossen. Ein Anschluß der IP-Übergabeeinheiten an das IP-orientierte Kommunikationsnetz IP-KN erfolgt dabei über weitere Anschlußeinheiten AE Die IP-Übergabeeinheiten IP-HUB weisen zusätzlich Teilnehmerschnittstellen TSS zum Anschluß von Kommunikationsendgeräten an das IP-orientierten Kommunikationsnetz IP-KN auf. Beispielhaft sind Kommunikationsendgeräte KE1,..., KEn dargestellt, die über die Teilnehmerschnittstellen TSS an einer IP-Übergabeeinheit IP-HUB angeschlossen sind.

Eine Datenübermittlung zwischen den Kommunikationsendgeräten KE1,...,KEn und der Vermittlungsanlage PBX erfolgt üblicherweise auf Basis von Substruktur-Elementen SE gemäß der sogenannten ATM-Anpassungsschicht AAL-Tpy2 (ATM Adaption Layer). Für eine Datenübermittlung zwischen den Kommunikationsendgeräten KE1,...,KEn und der Vermittlungsanlage PBX über das IP-orientierte Kommunikationsnetz IP-KN erfolgt durch die Anschlußeinheiten AE eine bidirektionale Umwandlung zwischen dem aus Substruktur-Elementen SE gebildeten Datenformat und dem Datenformat des IP-orientierten Kommunikationsnetzes IP-KN gemäß zweier unterschiedlicher Umwandlungsmodi, die im weiteren näher erläutert werden.

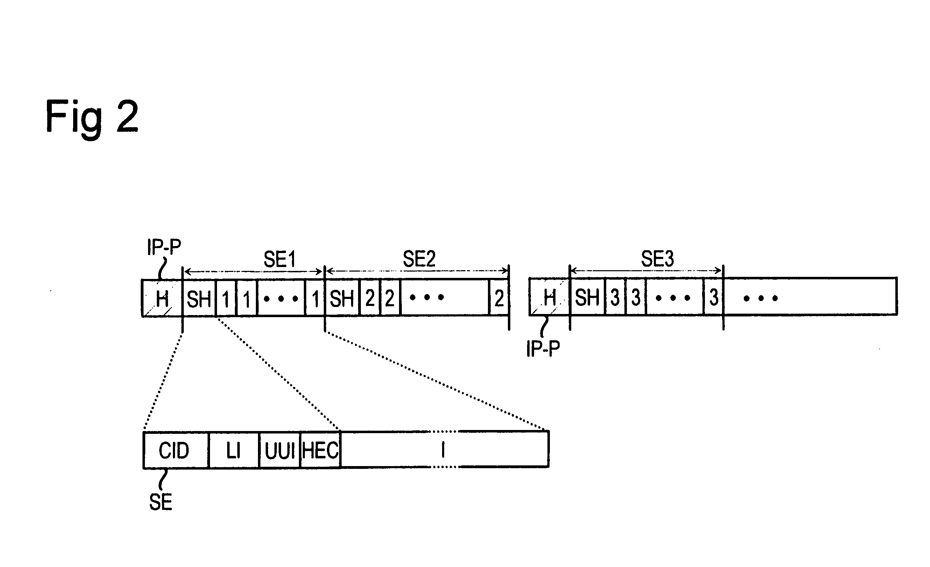

Fig. 2 zeigt eine schematische Darstellung von in Substruktur-Elemente SE untergliederten IP-Datenpaketen IP-P gemäß eines ersten Umwandlungsmodus. Ein IP-Datenpaket IP-P setzt sich aus einem Paketkopf H und einem Nutzdatenfeld mit einer variablen Länge von 1 - 65536 Byte zusammen. Im Paketkopf H sind im wesentlichen Vermittlungsdaten, wie z.B. die Ziel-und die Ursprungsadresse eines IP-Datenpakets IP-P gespeichert.

Ein Substruktur-Element SE setzt sich aus einem 3 Bytes langem Zellkopf SH und einem Nutzdatenbereich I variabler Länge (0 bis 64 Byte) zusammen. Der Zellkopf eines Substruktur-Elementes SE untergliedert sich wiederum in eine 8 Bit lange Kanal-Identifizierung CID (Channel Identifier), eine 6 Bit lange Längen-Identifizierung LI (Length Indicator), eine 5 Bit lange Sender-Empfänger-Identifizierung UUI (User-to-User Indication) und eine 5 Bit lange Zellkopf-Kontrollsumme HEC (Header Error Control). Durch die Kanal-Identifizierung CID besteht die Möglichkeit ein Substruktur-Element SE einer bestimmten Verbindung über das IP-orientierte Kommunikationsnetz IP-KN zuzuordnen und somit unterschiedlichen Kommunikationsendgeräten KE1,...,KEn zugeordnete Daten in einem IP-Datenpaket zu übermitteln. Durch die Längen-Identifizierung LI besteht die Möglichkeit ein Nutzdatenbereich I variabler Länge zu definieren, so daß eine Sprachverbindung zwischen einem Kommunikationsendgerät KE1,...,KEn und der Vermittlungsanlage PBX mit variabler Übertragungsbitrate realisierbar ist. Dies ermöglicht die Verwendung von Kompressionsalgorithmen in den Kommunikationsendgeräten KE1,...,KEn, die aus einem kontinuierlichen Datenstrom in Abhängigkeit von der in den zu übermittelnden Daten vorhandenen Redundanz einen variablen Datenstrom ohne Verfälschung der Information erzeugen.

Die Substruktur-Elemente SE werden gemäß des ersten Umwandlungsmodus derart in das Nutzdatenfeld eines IP-Datenpakets IP-P eingefügt, daß das erste Byte des Nutzdatenfeldes mit einem Zellkopf SH eines Substruktur-Elementes SE belegt wird und das letzte Byte des Nutzdatenfeldes mit dem letzten Byte eines Substruktur-Elementes SE abschließt. Das bedeutet, daß die Länge des Nutzdatenfeldes eines IP-Datenpakets IP-P so gewählt wird, daß ein oder mehrere Substruktur-Elemente SE vollständig in einem IP-Datenpaket IP-P übermittelt werden. Beispielhaft werden in der Figur zwei Substruktur-Elemente SE1, SE2 vollständig in einem ersten IP-Datenpaket IP-P und ein Substruktur-Element SE3 in einem zweiten IP-Datenpaket IP-P übermittelt.

Für den Fall, daß ein oder mehrere IP-Datenpakete IP-P, z.B. durch einen Übertragungsfehler verloren gegangen sind, ist mittels der Längen-Identifizierung LI des ersten im Nutzdatenfeld eines IP-Datenpakets IP-P übermittelten Substruktur-Elementes SE eine Synchronisation zwischen Sender und Empfänger möglich, da durch diese Längen-Identifizierung LI die Lage von eventuell im Nutzdatenfeld angeordneter weiterer Substruktur-Elemente SE ermittelt werden kann.

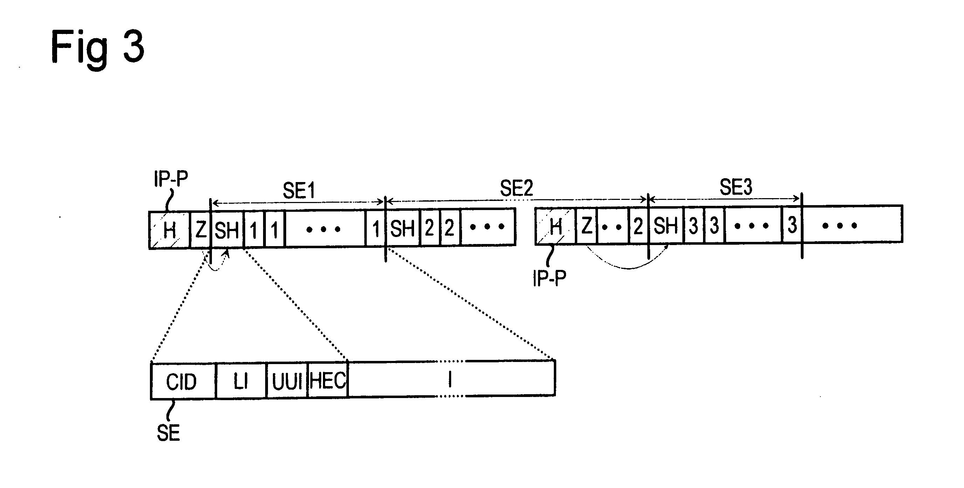

Fig. 3 zeigt eine schematische Darstellung von in Substruktur-Elemente SE untergliederten IP-Datenpaketen IP-P gemäß eines zweiten Umwandlungsmodus. Gemäß des zweiten Umwandlungsmodus können Substruktur-Elemente SE auch auf Nutzdatenfelder mehrerer IP-Datenpakete IP-P aufgeteilt werden. In der Figur beispielhaft für das Substruktur-Element SE2 dargestellt. Dies hat zur Folge, daß das Nutzdatenfeld eines IP-Datenpakets IP-P nicht mehr zwingend mit einem Zellkopf SH eines Substruktur-Elementes SE beginnen muß, so daß bei einem Verlust eines oder mehrerer IP-Datenpakete eine Synchronisation von Sender und Empfänger durch die Längen-Identifizierung LI eines Substruktur-Elementes SE nicht mehr möglich ist.

Hierzu ist das erste Byte des Nutzdatenfeldes eines IP-Datenpakets IP-P als Zeiger Z definiert. Eine Übermittlung der Substruktur-Elemente SE erfolgt somit erst mit dem zweiten Byte des Nutzdatenfeldes eines IP-Datenpakets IP-P. Dieser Zeiger Z gibt die Anfangsadresse des ersten Substruktur-Elementes SE an, dessen Zellkopf SH im Nutzdatenfeld eines IP-Datenpakets IP-P liegt. Mittels dieses Zeigers Z ist somit eine Wiederherstellung der Synchronisation zwischen Sender und Empfänger möglich.

Im Rahmen einer Datenübermittlung von einem Kommunikationsendgerät KE1,...,KEn an die Vermittlungsanlage PBX werden die zu übermittelnden Daten von dem Kommunikationsendgerät KE1,...,KEn in Form von Substruktur-Elementen SE an die dem Kommunikationsendgerät KE1,...,KEn zugeordnete IP-Ubergabeeinheit IP-HUB übermittelt. In der Anschlußeinheit AE der IP-Übergabeeinheit IP-HUB werden die Substruktur-Elemente SE gemäß des ersten bzw. des zweiten Umwandlungsmodus in Datenpakete IP-P eingefügt, wobei die Datenpakete IP-P im Paketkopf H die IP-Adresse der, der Vermittlungsanlage PBX zugeordneten Anschlußeinheit AE aufweisen. Anschließend werden die Datenpakete IP-P über das IP-orientierte Kommunikationsnetz IP-KN an die, der Vermittlungsanlage PBX zugeordnete Anschlußeinheit AE übermittelt. Diese Anschlußeinheit AE extrahiert die in den empfangenen Datenpaketen IP-P enthaltenen Substruktur-Elemente SE und leitet die extrahierten Substruktur-Elemente SE an die Vermittlungsanlage PBX weiter.

Im Rahmen einer Datenübermittlung von der Vermittlungsanlage PBX zu einem Kommunikationsendgerät KE1,...,KEn werden die zu übermittelnden Daten von der Vermittlungsanlage PBX in Form von Substruktur-Elementen SE an die der Vermittlungsanlage PBX zugeordnete Anschlußeinheit AE übermittelt. In der Anschlußeinheit AE werden die Substruktur-Elemente SE gemäß des ersten bzw. des zweiten Umwandlungsmodus in Datenpakete IP-P eingefügt, wobei die Datenpakete IP-P im Paketkopf H die IP-Adresse der, dem Kommunikationsendgerät KE1,...,KEn zugeordneten IP-Übergabeeinheit IP-HUB aufweisen. Anschließend werden die Datenpakete IP-P über das IP-orientierte Kommunikationsnetz IP-KN an die adressierte IP-Übergabeeinheit IP-HUB übermittelt. In der Anschlußeinheit AE der IP-Übergabeeinheit IP-HUB werden die in den empfangenen Datenpaketen IP-P enthaltenen Substruktur-Elemente SE extrahiert und anhand der in den Substruktur-Elementen SE gespeicherten Kanal-Identifizierung CID an das entsprechende Kommunikationsendgerät KE1,..., KEn weitergeleitet.

Durch eine Übermittlung von in Substruktur-Elementen SE gemäß der ATM-Anpassungsschicht AAL-Typ2 zusammengefaßten Daten über das IP-orientierte Kommunikationsnetz IP-KN entfällt eine bidirektionale Umwandlung zwischen dem in Substruktur-Elemente SE gegliederten Datenformat und dem üblicherweise für eine Übermittlung von Sprachdaten über das IP-orientierte Kommunikationsnetz IP-KN verwendete RTP-Datenformat. Zusätzlich entfällt auch die damit verbundene Kompression/Dekompression der Daten. Somit ist eine auf Substruktur-Elementen SE basierende Übermittlung von Sprachdaten über ein IP-orientiertes Kommunikationsnetz IP-KN von Sender zu Empfänger ohne Verlust der Sprachqualität durch mehrmalige Kompression und Dekompression der zu übermittelnden Sprachdaten möglich, da die Sprachdaten transparent, d.h. ohne Bearbeitung in den Substruktur-Elementen SE über das IP-orientierte Kommunikationsnetz IP-KN übermittelt werden.

## Patentansprüche

1. Verfahren zur Datenübermittlung von Kommunikationsendgeräten (KE1,...,KEn) über ein paket-orientiertes Kommunikationsnetz (IP-KN) an eine Vermittlungsanlage (PBX),
wobei die Kommunikationsendgeräte (KE1,...,KEn) über mindestens eine Übergabeeinheit (IP-HUB) und die Vermittlungsanlage (PBX) über eine Anschlußeinheit (AE) mit dem paket-orientierten Kommunikationsnetz (IP-KN) verbunden sind,
wobei für eine Datenübermittlung zwischen der Vermittlungsanlage (PBX) und den Kommunikationsendgeräten (KE1,...,KEn) ein aus Substruktur-Elementen (SE) gebildetes Datenformat eingerichtet ist,
wobei ein Kommunikationsendgerät (KE1,...,KEn) die zu übermittelnden Daten in Form von Substruktur-Elementen (SE) an die Übergabeeinheit (IP-HUB) übermittelt, welche die Substruktur-Elemente (SE) in Datenpakete (IP-P) einfügt, und
wobei die Anschlußeinheit (AE) die Substruktur-Elemente (SE) aus den empfangenen Datenpaketen (IP-P) extrahiert und die extrahierten Substruktur-Elemente (SE) an die Vermittlungsanlage (PBX) weiterleitet.

2. Verfahren zur Datenübermittlung von einer Vermittlungsanlage (PBX) über ein paket-orientiertes Kommunikationsnetz (IP-KN) an Kommunikationsendgeräte (KE1,...,KEn),
wobei die Kommunikationsendgeräte (KE1,...,KEn) über mindestens eine Übergabeeinheit (IP-HUB) und die Vermittlungsanlage (PBX) über eine Anschlußeinheit (AE) mit dem paket-orientierten Kommunikationsnetz (IP-KN) verbunden sind,
wobei für eine Datenübermittlung zwischen der Vermittlungsanlage (PBX) und den Kommunikationsendgeräten (KE1,...,KEn) ein aus Substruktur-Elementen (SE) gebildetes Datenformat eingerichtet ist,
wobei die Vermittlungsanlage (PBX) die zu übermittelnden Daten in Form von Substruktur-Elementen (SE) an die Anschlußeinheit (AE) übermittelt, welche die Substruktur-Elemente (SE) in Datenpakete (IP-P) einfügt, und
wobei die Übergabeeinheit (IP-HUB) die Substruktur-Elemente (SE) aus den empfangenen Datenpaketen (IP-P) extrahiert und die extrahierten Substruktur-Elemente (SE) an das entsprechende Kommunikationsendgerät (KE1,...,KEn) weiterleitet.

3. Verfahren nach Anspruch 1 oder 2,
**gekennzeichnet dadurch,**
**daß** die Datenpakete (IP-P) als IP-Datenpakete (Internet Protokoll) strukturiert sind.

4. Verfahren nach einem der vorhergehenden Ansprüche,
**gekennzeichnet dadurch,**
**daß** die Substruktur-Elemente (SE) jeweils einen Zellkopf (SH) aufweisen,
in dem ein Kanalidentifikator (CID) zur Bezeichnung einer Zuordnung der Substruktur-Elemente (SE) zu einem Kommunikationsendgerät (KE1,...,KEn) gespeichert wird, und
in dem eine Längeninformation (LI) zur Angabe der Anzahl von in einem Substruktur-Element (SE) übermittelten Nutzdaten-Segmenten gespeichert wird.

5. Verfahren nach einem der vorhergehenden Ansprüche,
**gekennzeichnet dadurch,**
**daß** die Substruktur-Elemente (SE) gemäß des ATM-Datenformats (Asynchroner Transfer Modus) nach einer, als zweite ATM-Anpassungsschicht AAL-Typ2 (ATM Adaption Layer) bekannten Vereinbarung strukturiert sind.

6. Verfahren nach einem der vorhergehenden Ansprüche,
**gekennzeichnet dadurch,**
**daß** für die Datenübermittlung die Substruktur-Elemente (SE) in einem Nutzdatenbereich eines Datenpaketes (IP-P) derart angeordnet sind, daß in einem als erstes Nutzdaten-Segment des IP-Datenpakets (IP-P) definierten Segment ein Substruktur-Element (SE) beginnt.

7. Verfahren nach einem der Ansprüche 1 bis 5,
**gekennzeichnet dadurch,**
**daß** in einem als erstes Nutzdaten-Segment eines IP-Datenpakets (IP-P) definierten Segment ein Zeiger (Z) definiert ist, mit dem die Anfangsadresse des ersten im Nutzdatenbereich eines IP-Datenpakets (IP-P) befindlichen Substruktur-Elementes (SE) bezeichnet wird.

## Claims

1. Method for transmitting data from communication terminals (KE1,...,KEn) via a packet-oriented communication network (IP-KN) to a switching system (PBX), the communication terminals (KE1,...,KEn) being connected to the packet-oriented communication network (IP-KN) via at least one hub (IP-HUB) and the switching system (PBX) via an access unit (AE), a data format formed of substructural elements (SE) being set up for a data transmission between the switching system (PBX) and the communication terminals (KE1,..., KEn),
in which a communication terminal (KE1,...,KEn) transmits the data to be transmitted in the form of substructural elements (SE) to the hub (IP-HUB) which inserts the substructural elements (SE) into data packets (IP-P) and the access unit (AE) extracts the substructural elements (SE) from the received data packets (IP-P) and forwards the extracted substructural elements (SE) to the switching system (PBX).

2. Method for transmitting data from a switching system (PBX) via a packet-oriented communication network (IP-KN) to communication terminals (KE1,...,KEn), the communication terminals (KE1,...,KEn) being connected to the packet-oriented communication network (IP-KN) via at least one hub (IP-HUB) and the switching system (PBX) via an access unit (AE), in which a data format formed of substructural elements (SE) is set up for a data transmission between the switching system (PBX) and the communication terminals (KE1,...,KEn),
in which the switching system (PBX) transmits the data to be transmitted in the form of substructural elements (SE) to the access unit (AE) which inserts the substructural elements (SE) into data packets (IP-P), and in which the hub (IP-HUB) extracts the substructural elements (SE) from the received data packets (IP-P) and forwards the extracted substructural elements (SE) to the corresponding communication terminal (KE1,..., KEn).

3. Method according to claim 1 or 2, **characterized in that** the data packets (IP-P) are structured as IP (Internet Protocol) data packets.

4. Method according to one of the preceding claims,
**characterized in that** the substructural elements (SE) in each case exhibit a cell header (SH) in which a channel identifier (CID) for designating an association of the substructural elements (SE) with a communication terminal (KE1,...,KEn) is stored and in which a length indicator (LI) for specifying the number of payload segments transmitted in a substructural element (SE) is stored.

5. Method according to one of the preceding claims,
**characterized in that** the substructural elements (SE) are structured according to the ATM (Asynchronous Transfer Mode) data format in accordance with a convention known as second ATM adaptation layer AAL-Typ2.

6. Method according to one of the preceding claims,
**characterized in that**, for the data transmission, the substructural elements (SE) are arranged in a payload area of a data packet (IP-P) in such a manner that a substructural element (SE) begins in a segment defined as the first payload segment of the IP data packet (IP-P).

7. Method according to one of claims 1 to 5, **characterized**
**in that**, in a segment defined as the first payload segment of an IP data packet (IP-P), a pointer (Z) is defined by means of which the start address of the first substructural element (SE) located in the payload area of an IP data packet (IP-P) is designated.

## Revendications

1. Procédé pour la transmission de données de terminaux de communication (KE1, ..., KEn) au moyen d'un réseau de communication (IP-KN) orienté paquet à un central téléphonique (PBX), les terminaux de communication (KE1, ..., KEn) étant reliés par au moins une unité de transfert (IP-HUB) et par le central téléphonique (PBX) via une unité de raccordement (AE) au réseau de communication (IP-KN) orienté paquet, un format de données formé d'éléments de sous-structure (SE) étant aménagé pour une transmission de données entre le central téléphonique (PBX) et les terminaux de communication (KE1, ..., KEn), un terminal de communication (KE1, ..., KEn) transmettant les données à transmettre sous forme d'éléments de sous-structure (SE) à l'unité de transfert (IP-HUB), qui insère les éléments de sous-structure (SE) dans des paquets de données (IP-P), et l'unité de raccordement (AE) extrayant les éléments de sous-structure (SE) des paquets de données (IP-P) reçus et transmettant les éléments de sous-structure (SE) extraits au central téléphonique (PBX).

2. Procédé pour la transmission de données d'un central téléphonique (PBX) via un réseau de communication (IP-KN) orienté paquet, à des terminaux de communication (KE1, ..., KEn), les terminaux de communication (KE1, ..., KEn) étant reliés par au moins une unité de transfert (IP-HUB) et le central téléphonique (PBX) via une unité de raccordement (AE) au réseau de communication (IP-KN) orienté paquet, un format de données formé d'éléments de sous-structure (SE) étant aménagé pour une transmission de données entre le central téléphonique (PBX) et les terminaux de communication (KE1, ..., KEn), le central téléphonique (PBX) insérant les données à transmettre sous la forme d'éléments de sous-structure (SE) à l'unité de traitement (AE) qui insère les éléments de sous-structure (SE) dans des paquets de données (IP-P), l'unité de transfert (IP-HUB) extrayant les éléments de sous-structure (SE) des paquets de données reçus (IP-P) et transmettant les éléments de sous-structure (SE) extraits au terminal de communication (KE1, ..., KEn) correspondant.

3. Procédé selon la revendication 1 ou 2, **caractérisé en ce que** les paquets de données (IP-P) sont structurés sous forme de paquets de données IP (Internet Protokoll).

4. Procédé selon l'une quelconque des revendications précédentes, **caractérisé en ce que** les éléments de sous-structure (SE) présentent chacun un en-tête de cellule (SH), dans lequel un identificateur de canal (CID) pour la désignation d'une attribution des éléments de sous-structure (SE) à un terminal de communication (KE1, ..., KEn) est stocké, et dans lequel une information sur la longueur (LI) pour l'indication du nombre de segments de données utiles transmis dans un élément de sous-structure (SE) est stockée.

5. Procédé selon l'une quelconque des revendications précédentes, **caractérisé en ce que** les éléments de sous-structure (SE) sont structurés selon le format de données ATM (Asynchrone Transfer Modus) selon un accord connu sous forme de seconde couche d'adaptation ATM AAL-Typ2 (ATM Adaptation Layer).

6. Procédé selon l'une quelconque des revendications précédentes, **caractérisé en ce que**, pour la transmission de données, les éléments de sous-structure (SE) sont disposés dans une zone de données utiles d'un paquet de données (IP-P) de telle sorte qu'un élément de sous-structure (SE) commence dans un segment défini comme premier segment de données utiles du paquet de données IP (IP-P).

7. Procédé selon l'une quelconque des revendications 1 à 5, **caractérisé en ce que**, dans un segment défini comme premier segment de données utiles d'un paquet de données IP (IP-P), on définit un indicateur (Z) avec lequel on désigne l'adresse initiale du premier élément de sous-structure (SE) se trouvant dans la zone de données utiles d'un paquet de données IP (IP-P).
